# EUROPEAN PATENT SPECIFICATION

(11) **EP 2 003 983 B1**
(45) Date of publication and mention of the grant of the patent: **23.01.2013**
(21) Application number: 07758746.7
(22) Date of filing: 16.03.2007
(51) Int. Cl.: A23G 4/06, A23L 1/22, A23L 1/235

(54) **LONG-DURATION ENCAPSULATED FLAVORS AND CHEWING GUM USING SAME**
LANGLEBIGE GEKAPSELTE AROMASTOFFE UND KAUGUMMI DAMIT
ARÔMES ENCAPSULÉS LONGUE DURÉE ET GOMME À MÂCHER DANS LAQUELLE SONT UTILISÉS CES ARÔMES ENCAPSULÉS LONGUE DURÉE

(30) Priority: 31.03.2006 US 787963 P
(43) Date of publication of application: 24.12.2008
(73) Proprietor: WM. WRIGLEY JR. COMPANY, Chicago, IL 60642 (US)
(72) Inventor: CASTRO, Armando, J., Westchester, IL 60154 (US); JOHNSON, Sonya, S., Legrange Highlands, IL 60525 (US)
(74) Representative: Hayes, Adrian Chetwynd
(86) International application number: PCT/US2007/064227
(87) International publication number: WO 2007/117870

(56) References cited:
- WO-A-2004/008872
- JP-A- 8 294 373
- US-A- 3 826 847
- US-A- 5 266 335
- US-A- 5 603 971
- US-A1- 2003 124 228

## Description

### BACKGROUND OF THE INVENTION

The present invention relates to flavored chewing gums that have long lasting flavor, as well as improved flavor retention using flavor encapsulation, as well as methods of encapsulating flavor, the resulting encapsulated flavor and methods of making such chewing gum.

Conventional mint flavored chewing gums are made with spearmint and peppermint flavor oils, which are also called essential oils and have a very high boiling point. These mint flavors are generally retained in the chewing gum for the entire shelf life of the product. Other essential oils are fruit flavored oils such as orange oil or lemon oil, or spice oils such as dove oil and wintergreen oil (methyl salicylate). These fruit or spice flavor oils have a relatively high boiling point, thus these also are retained in the chewing gum during its normal shelf life. However, many other fruit flavors are from flavor esters, and some of these esters have very high vapor pressures, and thus very low boiling points. Consequently, the low boiling flavor esters have a tendency to evaporate from the chewing gum and thus are not retained over the normal shelf life of the product. This causes a loss of taste if only the esters are used. Also, for mixed fruit flavors, which use a combination of fruit esters and orange, lemon and spice oils, the mixed fruit flavor changes during the shelf life of the shewing gum product.

Due to the characteristics of chewing gum, much higher levels of flavor are used in chewing gum than in other types of confections. As a result, the flavor changes are more dramatic in gum products than in other types of confections, especially when some of the flavor is lost due to volatility.

Various known methods to improve retention of volatile flavors involve encapsulation, either by spray drying with a variety of components, such as gum arabic or maltodextrins, or absorption onto various carriers, or by extrusion into a maltodextrin/polymer matrix. Some of these methods have not always been completely successful in retaining volatile flavors in chewing gum. While some other of the methods have been successful, they are also fairly complicated and/or expensive. Hence, there is a long felt need for a simple, fairly inexpensive method of treating volatile flavors, especially fruit esters, so that they are not lost from chewing gum as the gum undergoes its normal shelf life storage. U.S.Patent No. 7,022,352 discloses an improved encapsulation process that was found to provide exceptionally good retention of the volatile fruit esters.

WO-A-2004/008872 describes a chewing gum composition which comprises 5% to 95% gum base, 5% to 96% bulking and sweetening agents, and 0.1% to 15% flavour, wherein at least part of the flavor is a flavor encapsulated in a matrix comprising 30% to 60% acacia gum, 30% to 60% corn syrup solids having a DE of between 24 and 44, and 2% to 20% gelatin, with the acacia gum and corn syrup solids together comprising at least 80% of the matrix.

US-B-3,826,847 describes a chewing gum product having a durable flavor and containing seasonings including spices which have been coated, encapsulated or combined with high molecular weight compounds such as polyvinyl esters.

One additional area for improvement is the flavor duration of chewing gum. One would like the flavor to be present over as long of a time period as possible while chewing the gum. However, efforts to encapsulate flavors to prevent them from evaporating tend to also make the flavor release more quickly from the gum. Hence, it would be a great improvement if there were a way to both increase the retention of flavor in the gum as it is stored, and to make the flavor chew out of the gum more gradually.

### SUMMARY OF THE INVENTION

A method of encapsulating flavors has been developed that is simple, and gives the flavors good retention over the normal shelf life storage of chewing gum into which they are mixed, yet surprisingly increases the flavor duration of the gum. The invention is useful for all types of flavors, but is preferred for volatile flavors.

In a first aspect the invention is a method of encapsulating flavor to provide a long-duration flavor material comprising: providing a flavor; providing encapsulating ingredients comprising acacia gum, corn syrup solids having a DE of between 24 and 44 or equivalent hydrogenated starch hydrolysates, and carrageenan or pectin and mixtures thereof as hydrocolloid material; encapsulating the flavor with a matrix comprising 30% to 60% acacia gum, 30% to 60% corn syrup solids or hydrogenated starch hydrolysates, and 2% to 20% hydrocolloid material to form an encapsulated flavor material, and further combining the encapsulated flavor material with a vinyl polymer to incorporate the encapsulated flavor into a long-duration flavor material comprising the vinyl polymer by extrusion.

In a second aspect the invention is long-duration flavor material comprising 30% to 80% vinyl polymer and 20% and 70% encapsulated flavor; wherein the encapsulated flavor comprises 5% to 25% flavor and a matrix encapsulating the flavor, the matrix comprising 30% to 60% acacia gum, 30% to 60% corn syrup solids having a DE of between 24 and 44 or equivalent hydrogenated starch hydrolysates; and 2% to 20% carrageenan or pectin mixtures thereof as hydrocolloid material, wherein the matrix comprises at least 80% acacia gum and corn syrup solids or hydrogenated starch hydrolysates on a combined basis; and the encapsulated flavor vinyl polymer combined by extrusion at a temperature of between 75 °C and 110 °C.

In a third aspect the invention is a chewing gum composition comprising 0.1% to 15% flavor, wherein at least part of the flavor comprises a long-duration flavor material comprising a vinyl polymer encapsulated matrix, the matrix encapsulated with the vinyl polymer by extrusion at between 75 °C and 110 °C, wherein the matrix comprises 30% to 60% acacia gum, 30% to 60% corn syrup solids having a DE of between 24 and 44 or equivalent hydrogenated starch hydrolysates, and 2% to 20% carrageenan or pectin and mixtures thereof as hydrocolloid material, the matrix comprising at least 80% acacia gum and corn syrup solids or hydrogenated starch hydrolysates on a combined basis.

The encapsulation of the present invention provides a simple and low cost but effective encapsulation of flavors, particularly volatile flavors, and provides a surprisingly long flavor duration when mixed into chewing gum compositions. As a result, chewing gum made with the encapsulated flavor of the present invention can have a long shelf life, maintain its flavor level, or the correct blend of flavors, for commercially significant shelf life periods, and also provide long lasting flavor when chewed.

The invention and its advantages will be better understood in view of the attached drawings.

### BRIEF DESCRIPTION OF THE DRAWINGS

Figure 1 is a graph showing test results of one example matrix of the invention and some comparative examples.

Figure 2 is another graph, showing test results of second and third example matrices of the invention and some comparative examples.

Figure 3 is another graph, showing flavor duration test results of fourth and fifth examples of the invention and a control.

Figure 4 is another graph, showing sweetness duration test results of fourth and fifth examples of the invention and a control.

Figure 5 is another graph, showing flavor duration test results of the fifth example of the invention and some comparative examples.

Figure 6 is another graph, showing sweetness duration test results of the fifth example of the invention and some comparative examples.

### DETAILED DESCRIPTION OF THE DRAWINGS AND PREFERRED EMBODIMENTS OF THE INVENTION

The present invention will now be further described. In the following passages, different aspects of the invention are defined in more detail. Each aspect so defined may be combined with any other aspect or aspects unless dearly indicated to the contrary. In particular, any feature indicated as being preferred or advantageous may be combined with any other feature or features indicated as being preferred or advantageous.

In the description that follows, all percentages are weight percentages unless otherwise indicated. The term chewing gum as used herein and in the claims that follow also includes bubble gum and the like. First the aspect of the invention relating to stability will be described, followed by the aspect relating to long-duration flavor.

Some flavor components that are volatile and are lost during the shelf life of the gum product are:

| | Boiling Point (°C) | Flash Point (°C)(°F) |
|---|---|---|
| Ethyl butyrate | 120 | 19 (67) |
| Isoamyl acetate | 142 | 25 (77) |
| Ethyl propionate | 99 | 12 (54) |
| Ethyl acetate | 77 | -3 (26) |
| Ethyl caproate | 167 | 49 (121) |
| Amyl acetate | 142 | 24 (75) |
| Ethyl isobutyrate | 112 | 14 (57) |
| Propyl acetate | 102 | 19 (67) |
| Isobutyl acetate | 115 | 22 (71) |

Some non-volatile flavor components often used in chewing gum are:

| | Boiling Point (°C) | Flash Point (°C)(F°)) |
|---|---|---|
| Lemon oil | 176 | 54 (130) |
| Orange oil | 175 | 54 (130) |
| Clove oil | 251 | 110 (230) |
| Peppermint oil | 210 | 77 (170) |
| Spearmint oil | 220 | 93 (200) |
| Cinnamaldehyde | 240 | 71 (160) |
| Methyl salicylate | 222 | >110 (230) |

Flavors that are volatile are also relatively low boiling point compounds compared to other non-volatile flavors, as can be seen from the boiling point information above. Volatile flavor components generally have a boiling point below 160°C. These materials also have a very low flash point, which could cause them to be flammable. Generally, the flash point for the volatile flavor components is less than 49°C (120°F). Since many of the non-volatile flavor components may also contain some low boiling point components in them, the disclosed spray drying matrix may also be used to give a more stable spray dried matrix retaining the entire flavor.

A matrix of acacia gum, such as gum arabic; corn syrup solids having a DE of 24 to 44 or equivalent hydrogenated starch hydrolysates; and hydrocolloid material, has been found to give an improved encapsulated product containing the flavor. In an embodiment, the matrix may have a ratio of 10 parts gum arabic, 10 parts corn syrup solids having a DE of 24-44 or equivalent hydrogenated starch hydrolysates, and 1 part hydrocolloid material.

The matrix containing these three components should be within the range of 30-60% acacia gum, 30-60% corn syrup solids having a DE of 24-44 or equivalent hydrogenated starch hydrolysates, and 2-20% hydrocolloid material, with the combination of acacia gum and corn syrup solids or hydrogenated starch hydrolysates being at least 80% of the matrix. In an embodiments, the range should be 40-50% acacia gum, 40-50% corn syrup solids having a DE of 24-44 or equivalent hydrogenated starch hydrolysates, and 2-10% hydrocolloid material. The ratio of acacia gum to corn syrup solids or hydrogenated starch hydrolysates is generally between 2:1 and 1:2, and the ratio of hydrocolloid material to the total of acacia gum and corn syrup solids or hydrogenated starch hydrolysates is between 5:1 and 40:1. Most preferably the ratio of acacia gum:corn syrup solids or hydrogenated starch hydrolysates:hydrocolloid material is 1:1:0.1.

The finished encapsulated flavor composition should be 5-25% flavor, 24-48% acacia gum, 24-48% corn syrup solids having a DE of 24-44 or equivalent hydrogenated starch hydrolysates, and 2-16% hydrocolloid material. In an embodiment, the final encapsulated flavor composition should be 15-20% flavor, 30-40% acacia gum, 30-40% corn syrup solids having a DE of 24-44 or equivalent hydrogenated starch hydrolysates, and 2-8% hydrocolloid material. The ratio of the flavor to the matrix is preferably between 1:4 and 1:20.

The preferred acacia gum is gum arabic, which comes from Acacia *Senegal.* A preferred gum arabic is VALSPRAY A 53000, a spray dried gum arabic supplied by VALMAR, Z.I. St. Mitre, 13400 Aubagne, France. The moisture in this material is less than 10%. Gum arabic from *Acacia Seyal* (sometimes referred to as guru talha) may also be used. The low moisture content of commercially supplied acacia gum, as well as other ingredients used to make the matrix, is ignored in the present description and claims. Thus, the amounts of acacia gum used in the examples is recited as if commercially supplied acacia gum was 100% acacia gum and had no moisture.

The preferred corn syrup solids have a DE of between 24 and 44. Equivalent hydrogenated starch hydrolysates are likewise preferred, In an embodiment, the corn syrup solids have a DE of between 30 and 44. More preferably the corn syrup solids have a DE of between 36 and 44. In an embodiments of the invention, the corn syrup solids have a DE of about 44. A suitable corn syrup solids product is STAR-DRI 42 from A.E. Staley Manufacturing Co., 2200 E. Eldorado St., Decatur, IL. Equivalent hydrogenated starch hydrolysates to each of the above ranges of DE can also be used. (Of course, when discussing hydrogenated starch hydrolysates, the term DE is not used. In the present application it is to be understood that the term "equivalent hydrogenated starch hydrolysates", when referring to a specific DE corn syrup, means hydrogenated starch hydrolysates that would be produced if a corn syrup having that DE were hydrogenated.)

The hydrocolloid materials includes carrageenan or pectin. These can be used individually or in combinations. Hydrocolloids are hydrophilic polymers of vegetable, animal, microbial or synthetic origin. The hydrocolloid material presently being most preferred is carrageenan. The amount of hydrocolloid material needed will depend on the hydrocolloid material used, as will be understood by one of ordinary skill in the art.

The volatile flavors that are particularly useful when encapsulated according to the present invention include ethyl butyrate, isoamyl acetate, ethyl propionate, ethyl acetate, ethyl caproate, amyl acetate, ethyl isobutyrate, propyl acetate, isobutyl acetate and mixtures thereof, and mixtures of the above with other flavors such as orange oil, lemon oil, clover oil, peppermint oil, spearmint oil, cinnamaldehyde, methyl salicylate and mixtures thereof.

Spray drying is the most common and economical method of encapsulating the flavors to form the matrix that provides volatile flavor retention, although other encapsulation techniques may be used. The mixture used for the spray drying will generally comprise 0% to 60% water, 32% to 10% encapsulating ingredients and 5% to 12% flavor prior to being spray dried. To prepare flavors for spray drying, the carrier or wall material (the acacia gum, corn syrup solids or hydrogenated starch hydrolysates and hydrocolloid material) is hydrated to give a 40-50% solution. For the comparative and inventive examples 1-3 described hereafter, a 50% solution of acacia gum was hydrated overnight. The corn syrup solids and gelatin were hydrated for a few minutes to give a 50% solution just before mixing with the acacia gum solution and the flavor. The flavor was added to the mix of acacia gum and the other ingredients and homogenized. The ratio of solids to flavor material was about 4:1. The mixture was homogenized to create small droplets of flavor within the carrier solution. It is believed that the creation of a finer emulsion increases the retention of flavor during the spray drying process. The flavor/carrier mixture was fed into a Niro Atomizer Spray Dryer, where it was atomized through a spinning wheel. Hot air flowing in co-current direction contacted the atomized particles and evaporated the water. This produced dried particles having the matrix containing small droplets of flavor. The dried particles fell to the bottom of the dryer and were collected. The inlet temperature for spray drying was between 180-205°C and the outlet temperature was between 80-105°C. Preferably the spray drying inlet temperature will be between about 190°C and about 200°C.

The matrix provided according to the foregoing, while providing a good retention of volatile flavor components, will not result in a long flavor duration when mixed into chewing gum. To increase the flavor duration, the matrix is combined with a vinyl polymer, such as polyvinyl acetate, to further encapsulate the flavor matrix. The matrix and vinyl polymer may be combined by any processes that melts the polymer and mixes the two so that the polymer encapsulates or coats the matrix. For example, the encapsulated flavor and polyvinyl acetate may be mixed together and heated to a temperature of between 75°C and 110°C, such as by extrusion. One method of combining the matrix and vinyl polymer is the process disclosed in U.S. Patent No. 5,229,148.

In addition to polyvinyl acetate, the vinyl polymers may be chosen from the group consisting of polyvinyl stearate; polyvinyl butyrate; polyvinyl propionate; polyvinyl alkanoates; copolymers of vinylacetate, vinyllaurate, vinylacetate and vinylalkanoates; and polymers of ethylene-vinyl acetate, butylene-vinylacetate, and other alkenyl-vinylacetates. The ratio of vinyl polymer to flavor matrix will typically be in the range of 3:1 and 1:3. Typically the long-duration flavor material comprises between 20% and 70% encapsulated flavor and 30% to 80% vinyl polymer. Thus, the long-duration flavor material may comprise 4% to 15% flavor, 10% to 30% gum arabic, 10% to 30% corn syrup solids or hydrogenated starch hydrolysates, 1% to 10% hydrocolloid material and 20% to 75% vinyl polymer. The long-duration flavor material will typically have a flavor loading of between 5% and 20%.

In one exemplary method of making the long-duration flavor material, a dry blended mixture of encapsulated flavor and polyvinyl acetate are heated in an extruder to a temperature of between 75°C and 110°C. A suitable polyvinyl acetate for use in the invention has a weight average molecular weight of between 25,000 and 100,000. Several suitable polyvinyl acetates are VINNAPAS® B 14 SP (molecular weight between 25,000 - 33,000); VINNAPAS® B 30 SP (molecular weight between 45,000 - 55,000); and VINNAPAS® B 100 SP (molecular weight between 80,000 -100,000), all from Wacker Chemical Corporation, 3301 Sutton Road, Adrian, MI 49221-9397. In an embodiment, the polyvinyl acetate has a weight average molecular weight of 50,000 to 80,000.

After the matrix is encapsulated in the vinyl polymer, it will usually be ground or otherwise have its particle size reduced. The polymer should provide an extrudate that is hard enough to be milled. If a soft polymer is used, fillers like nanoclay, silica dioxide, talc, etc. may by added to a lower molecular weight vinyl polymer. Typically the ground material will be separated into fractions or cuts, with the desired particle size being used and the large and small particles being reground or extruded again. The fraction used will typically have a weight average particle size of between 100 µm (microns) and 1000 µm (microns). One example long-duration flavor material has a particle size such at it passes through a USA standard testing sieve #18 but stays on a USA standard testing sieve #20, giving it particle sizes between 840 µm (microns) and 1000 µm (microns).

The long-duration flavor material may further comprise a high-intensity sweetener, usually at a level of between 0.1% and 5%. The long-duration flavor material will usually be added to the chewing gum so that it comprises 1 % to 20% of the chewing gum composition.

The long-duration flavor material of the present invention can be utilized in a wide variety of chewing gum compositions, including sugar gums and sugarless gums, formed into a wide variety of products, including gum sticks as well as pellets or balls.

In general, a chewing gum composition typically comprises a water-soluble bulk portion, a water-insoluble chewable grams base portion and typically water-insoluble flavoring agents. The water-soluble portion dissipates with a portion of the flavoring agent over a period of time during chewing. The gum base portion is retained in the mouth throughout the chew.

The insoluble gum base generally comprises elastomers, resins, fats and oils, softeners and inorganic fillers. The gum base may or may not include wax. The insoluble gum base can constitute 5% to 95% by weight of the chewing gum, more commonly the gum base comprises 10% to 50% of the gum, and in some embodiments 25% to 35% by weight, of the chewing gum.

In a particular embodiment, the chewing gum base of the present invention contains 20% to 60% by weight synthetic elastomer, 0% to 30% by weight natural elastomer, 5% to 55% by weight elastomer plasticizer, 4% to 35% by weight filler, 5% to 35% by weight softener, and optional minor amounts (1 or less by weight) of miscellaneous ingredients such as colorants, antioxidants, etc.

Synthetic elastomers may include, but are not limited to, polyisobutylene with GPC weight average molecular weight of 10,000 to 95,000, isobutylene-isoprene copolymer (butyl elastomer), styrene-butadiene, copolymers having styrene-butadiene ratios of 1:3 to 3: , polyvinyl acetate having GPC weight average molecular weight of 2,000 to 90,000, polyisoprene, polyethylene, vinyl acetate - vinyl laurate copolymer having vinyl laurate content of 5% to 50% by weight of the copolymer, and combinations thereof.

In an embodiment, ranges for polyisobutylene are 50,000 to 80,000 GPC weight average molecular weight and for styrene-butadiene are 1:1 to 1:3 bound styrene-butadiene, for polyvinyl acetate are 10,000 to 65,000 GPC weight average molecular weight with the higher molecular weight polyvinyl acetates typically used in bubble gum base, and for vinyl acetate-vinyl laurate, vinyl laurate content of 10-45%.

Natural elastomers may include natural rubber such as smoked or liquid latex and guayule as well as natural gurus such as jelutong, lechi caspi, perillo, sorva, massaranduba balata, massaranduba chocolate, nispero, rosindinha, chide, gutta hang kang, and combinations thereof. In an embodiment, the synthetic elastomer and natural elastomer concentrations vary depending on whether the chewing gum in which the base is used is adhesive or conventional, bubble gum or regular gum, as discussed below. Preferred natural elastomers include jelutong, chicle, sorva and massaranduba balata.

Elastomer plasticizers may include, but are not limited to, natural rosin esters such as glycerol esters or partially hydrogenated rosin, glycerol esters of polymerized rosin, glycerol esters of partially dimerized rosin, glycerol esters of rosin, pentaerythritol esters of partially hydrogenated rosin, methyl and partially hydrogenated methyl esters of rosin, pentaerythritol esters of rosin; synthetics such as terpene resins derived from alpha-pinene, beta-pinene, and/or d-limonene; and any suitable combinations of the foregoing. The preferred elastomer plasticizers will also vary depending on the specific application, and on the type of elastomer that is used.

Fillers/texturizers may include magnesium and calcium carbonate, ground limestone, silicate types such as magnesium and aluminum silicate, clay, alumina, talc, titanium oxide, mono-, di- and tri-calcium phosphate, cellulose polymers, such as wood, and combinations thereof. Softeners/emulsifiers may include tallow, hydrogenated tallow, hydrogenated and partially hydrogenated vegetable oils, cocoa butter, glycerol monostearate, glycerol triacetate, lecithin, mono-, di- and triglycerides, acetylated monoglycerides, fatty acids (e.g. stearic, palmitic, oleic and linoleic acids), and combinations thereof.

Colorants and whiteners may include FD&C-type dyes and lakes, fruit and vegetable extracts, titanium dioxide, and combinations thereof.

The base may or may not include wax. An example of a wax-free gum base is disclosed in U.S. Patent No. 5,286,500.

In addition to a water insoluble gum base portion, a typical chewing gum composition includes a water-soluble bulk portion and one or more flavoring agents. The water-soluble portion can include bulk sweeteners and or other bulking and sweetening agents, including high-intensity sweeteners; flavoring agents, softeners, emulsifiers, colors, acidulants, fillers, antioxidants, and other components that provide desired attributes.

Softeners are added to the chewing gum in order to optimize the chewability and mouth feel of the gum. The softeners, which are also known as plasticizers and plasticizing agents, generally constitute between 0.5% to 15% by weight of the chewing gum. The softeners may include glycerin, lecithin, and combinations thereof. Aqueous sweetener solutions such as those containing sorbitol, hydrogenated starch hydrolysates, corn syrup and combinations thereof, may also be used as softeners and binding agents in chewing gum.

Bulk sweeteners include both sugar and sugarless components. Bulk and sweetening agents typically constitute 5% to 95% by weight of the chewing gum, more typically, 20% to 80% by weight, and more commonly, 30% to 60% by weight of the gum. Sugar sweeteners generally include saccharide-containing components commonly known in the chewing gum art, including but not limited to, sucrose, dextrose, maltose, dextrin, dried invert sugar, fructose, levulose, galactose, corn syrup solids, and the like, alone or in combination. Sugarless sweeteners include, but are not limited to, sugar alcohols such as sorbitol, mannitol, xylitol, hydrogenated starch hydrolysates, maltitol, and the like, alone or in combination.

High-intensity sweeteners can also be used, alone or in combination, with the above bulk sweeteners, as well as In the long-duration flavor material. In an embodiment, sweeteners include, but are not limited to, sucralose, aspartame, N-substituted APM derivatives such as neotame, salts of acesulfame, alitame, saccharin and its salts, cyclamic acid and its salts, glycyrrhizinate, dihydrochalcones, thaumatin, monellin, and the like, alone or in combination. In order to provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and fiber extension may be used to achieve the desired release characteristics.

Combinations of sugar and/or sugarless sweeteners may be used in chewing gum. Additionally, the softener may also provide additional sweetness such as with aqueous sugar or alditol solutions.

If a low calorie gum is desired, a low caloric bulking agent can be used. Examples of low caloric bulking agents include: polydextrose; Raftilose, Raftilin; fructooligosaccharides (NutraFlora); palatinose oligosaccharide; guar gum hydrolysate (Sun Fiber); or indigestible dextrin (Fibersol). However, other low calorie bulking agents can be used.

In addition to the long-duration flavor material discussed above, a variety of additional flavoring agents can also be used, if desired. Of course some of the spray dried flavor not encapsulated with a vinyl polymer may be included with the long-duration flavor material. The flavor can be used in amounts of 0.1% to 15% of the gum, and preferably, 0.2% to 5% by weight. The amount of flavor in the long-duration flavor material may comprise 0.1% to 10% of the chewing gum composition. The additional flavoring agents may include essential oils, synthetic flavors or mixtures thereof including, but not limited to, oils derived from plants and fruits such as citrus oils, fruit essences, peppermint oil, spearmint oil, other mint oils, clove oil, oil of wintergreen, anise and the like. Artificial flavoring agents and components may also be used. Natural and artificial flavoring agents may be combined in any sensorially acceptable fashion.

In general, chewing gum is manufactured by sequentially adding the various chewing gum ingredients to a commercially available mixer known in the art. After the ingredients have been thoroughly mixed, the gum mass is discharged from the mixer and shaped into the desired form such as rolling sheets and cutting into sticks, extruding into chunks or casting into pellets, which are then coated or panned.

Generally, the ingredients are mixed by first melting the gum base and adding it to the running mixer. The base may also be melted in the mixer itself: Color or emulsifiers may also be added at this time. A softener such as glycerin may also be added at this time, along with syrup and a portion of the bulking agent. Further parts of the bulking agent are added to the mixer. Flavoring agents, such as the long-duration flavor material, are typically added with the final portion of the bulking agent. Other optional ingredients are added to the batch in a typical fashion, well known to those of ordinary skill in the art.

The entire mixing procedure typically takes from five to fifteen minutes, but longer mixing times may sometimes be required. Those skilled in the art will recognize that many variations of the above-described procedure may be followed.

### Examples - Flavor Retention

The first step in the invention was to make an encapsulated flavor that prevented volatilization of the flavor and retained the flavor over time. One of the most common fruit esters is ethyl butyrate (pineapple flavor). This material is used in a variety of fruit flavor blends for chewing gum. Because it is very volatile, it will dissipate from the chewing gum formula, which will modify the overall fruit flavor of the final product. By spray drying the ethyl butyrate, the flavor will be retained in the chewing gum matrix for a longer period of time. However, the spray drying encapsulant is very important since the flavor must be held in the encapsulating matrix as long as possible. Many standard encapsulants are not sufficiently effective to retain volatile flavors such as ethyl butyrate. As a result, tests were done to determine the extent of loss of ethyl butyrate in various encapsulants. A chewing gum composition was prepared according to the following formula:

| | % |
|---|---|
| Sugar | 58.23 |
| Gum Base | 19.30 |
| 45.5 Be Corn Syrup | 13.91 |
| Dextrose Monohydrate | 7.28 |
| Glycerin | 1.15 |
| Lecithin | 0.13 |
| Total | 100.0 |

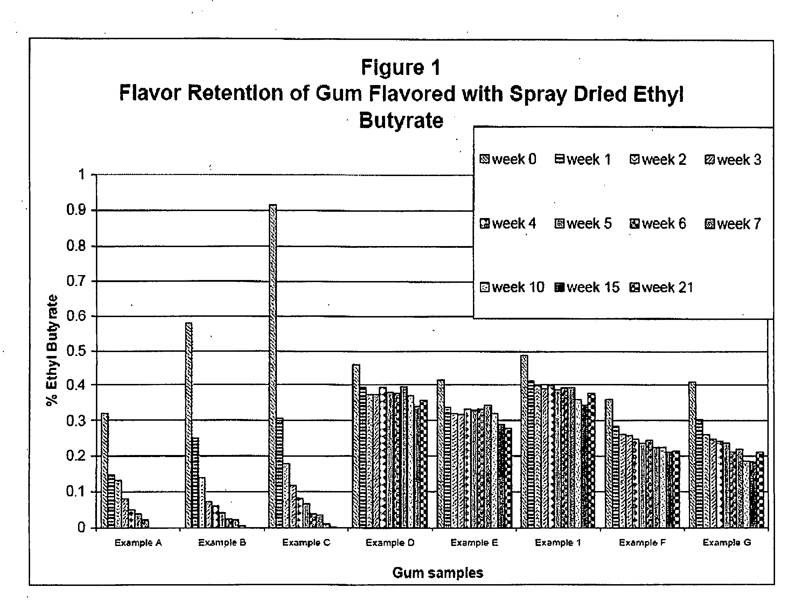

The encapsulated ethyl butyrate materials were added to the chewing gum and stored unwrapped at room temperature for up to 20 weeks. At different weekly intervals, samples were taken and analyzed for ethyl butyrate. The level of retained ethyl butyrate was recorded in Table 1 below, and the results graphed in Figure 1.

Comparative Examples A, B, and C - To the above gum formula was added 0.5 %, 1.0%, and 2.0% liquid ethyl butyrate, reducing the sugar level by an equal amount to make Examples A, B, and C, respectively.

Comparative Example D - To the above gum formula was added 5.9% of a spray dried ethyl butyrate made with 77% acacia gum and 4% fish gelatin, giving a spray dried material with an active ethyl butyrate of 8.57% and a level of 0.5% in the gum.

Comparative Example E - To the above gum formula was added 10.0% of a spray dried ethyl butyrate made with 38% acacia gum, 38% maltodextrin with a DE of 1, and 4% fish gelatin, giving a spray dried material with an active ethyl butyrate of 5% and an active level of 0.5% in the gum.

Comparative Example F - To the above gum formula was added 8.9% of a spray dried ethyl butyrate made with 79% acacia gum and 1% fish gelatin, giving a spray dried material with an active ethyl butyrate of 5.66% and an active level of 0.5% in the gum.

Comparative Example G - To the above gum formula was added 4.05% of a spray dried ethyl butyrate made with 60% corn syrup solids with a DE of 44, and 20% fish gelatin, giving a spray dried material with an active ethyl butyrate of 12.27% and an active level of 0.5% in the gum.

Matrix Example 1 (not according to the invention) - To the above gum formula was added 5.55% of a spray dried ethyl butyrate made with 38% acacia gum, 38% corn syrup solids with a DE of 44, and 4% fish gelatin, giving a spray dried material with an active ethyl butyrate of 11.03% and an active level of 0.5% in the gum.

The amount of ethyl butyrate in each of the gum samples was analyzed at intervals from zero to 21 weeks. The percentage of ethyl butyrate in the gum is presented in Table 1 below.

**Table 1**

| | Comp. Example A | Comp. Example B | Comp. Example C | Comp. Example D | Comp. Example E | Matrix Example 1 | Comp. Example F | Comp. Example G |
|---|---|---|---|---|---|---|---|---|
| Week 0 | 0.32 | 0.580 | 0.914 | 0.461 | 0.415 | 0.487 | 0.359 | 0.410 |
| Week 1 | 0.148 | 0.250 | 0.308 | 0.393 | 0.337 | 0.414 | 0.285 | 0.304 |
| Week 2 | 0.130 | 0.140 | 0.179 | 0.374 | 0.321 | 0.398 | 0.261 | 0.262 |
| Week 3 | 0.82 | 0.074 | 0.116 | 0.373 | 0.316 | 0.390 | 0.258 | 0.248 |
| Week 4 | 0.05 | 0.061 | 0.082 | 0.392 | 0.331 | 0.399 | 0.240 | 0.244 |
| Week 5 | 0.038 | 0.041 | 0.066 | 0.378 | 0.330 | 0.387 | 0.238 | 0.237 |
| Week 6 | 0.024 | 0.026 | 0.039 | 0.378 | 0.331 | 0.394 | 0.245 | 0.212 |
| Week 7 | | 0.023 | 0.035 | 0.396 | 0.342 | 0.394 | 0.226 | 0.220 |
| Week 10 | | 0.006 | 0.011 | 0.370 | 0.321 | 0.359 | 0.225 | 0.186 |
| Week 15 | | 0.001 | 0.003 | 0.341 | 0.289 | 0.343 | 0.211 | 0.186 |
| Week 21 | | | 0.001 | 0.357 | 0.28 | 0.377 | 0.215 | 0.212 |

As can be seen from the data in Table 1 and in Figure 1, about 40% of liquid ethyl butyrate in Comparative Examples A, B and C was lost during processing, and over the next 10 weeks almost all of the remainder of the flavor was lost. Also depicted graphically in Figure 1, there is a slight loss of ethyl butyrate over 21 weeks for example D and considerable loss of ethyl butyrate from examples E, F, and G, but less of a loss of flavor ester in the Matrix Example 1.

In another set of examples, a mixed fruit flavor blend was made with two volatile flavor esters, ethyl butyrate and isoamyl acetate. These were blended with orange oil and lemon oil in the following proportions:

| | % |
|---|---|
| ethyl butyrate | 50 |
| isoamyl acetate | 25 |
| orange oil | 15 |
| lemon oil | 10 |
| | 100 |

This flavor was spray dried with three different encapsulating compositions. One was with 100% acacia gum (Comparative Examples J and K), the second with a 50:50 blend of acacia gum and 44 DE corn syrup solids (Comparative Examples L and M), and the third with an embodiment of the composition of 1:1:0.1125 of acacia gum:44 DE corn syrup solids:fish gelatin Matrix Examples 2 and 3 not according to the invention). The encapsulating compositions were dissolved in water at 44.4% solids, and then the mixed fruit flavor was dispersed in the water at a 10% level, giving a mixture of 50% water, 40% encapsulants, and 10% flavor.

Each of the three compositions were spray dried at two different inlet temperatures (190°C or 200°C) to determine which temperature would give increased loading of the flavor into the encapsulant. Based on the results, more loading could be achieved with an inlet temperature of 190°C. Each of the six examples was used to make chewing gum in the formula shown above.

Comparative Example H - To the above gum formula was added 0.81 % mixed fruit flavor with a corresponding decrease in the amount of sugar.

Comparative Example J - To the above gum formula was added 4.8% of the spray dried flavor made with 100% acacia gum at 190°C, giving a spray dried material with an active fruit flavor level of 16.95% and an active level of 0.81 % in the gum.

Comparative Example K - To the above gum formula was added 7.2% of the spray dried flavor made with 100% acacia gum at 200°C, giving a spray dried material with an active fruit flavor level of 11.3% and an active level of 0.81 % in the gum.

Comparative Example L - To the above gum formula was added 6.8% of the spray dried flavor made with 50% acacia gum and 50% 44 DE corn syrup solids at 190°C, giving a spray dried material with an active fruit flavor level of 11.95% and an active level of 0.81 % in the gum.

Comparative Example M - To the above gum formula was added 6.2% of the spray dried flavor made with 50% acacia gum and 50% 44 DE corn syrup solids at 200°C, giving a spray dried material with an active fruit flavor level of 13.11 % and an active level of 0.81 % in the gum.

Inventive Matrix Example 2 - To the above gum formula was added 4.9% of the spray dried flavor made with 38% acacia gum, 38% 44 DE corn syrup solids, and 4% fish gelatin at 190°C, giving a spray dried material with an active fruit flavor level of 16.52% and an active level of 0.81% in the gum.

Matrix Example 3 (not according to the invention) - To the above gum formula was added 5.1% of the spray dried flavor made with 38% acacia gum, 38% 44 DE corn syrup solids, and 4% fish gelatin at 200°C, giving a spray dried material with an active fruit flavor level of 15.82% and an active level of 0.81 % to in the gum.

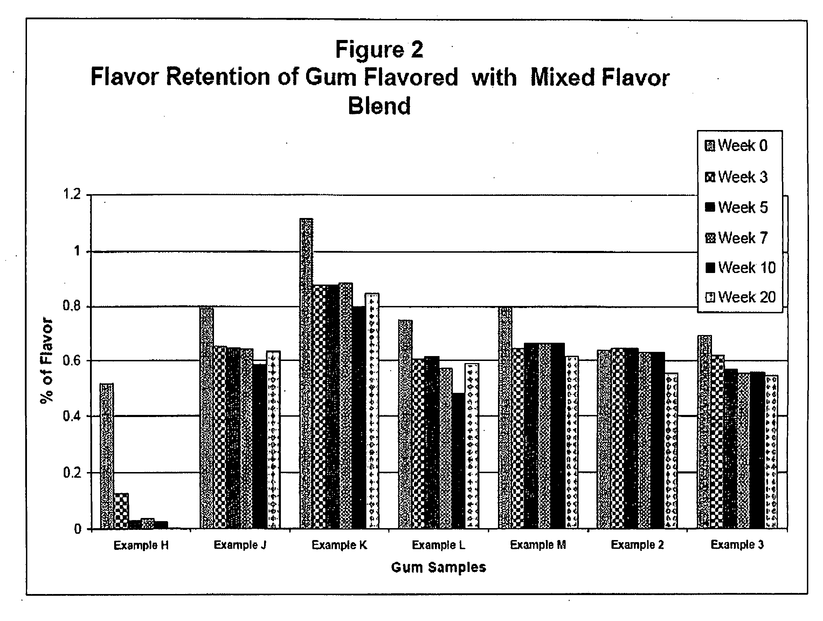

Stability test results of the spray dried materials in gum are shown in Table 2, and depicted in Figure 2. The percentage amount of fruit flavor in the gum at various time intervals is recorded below.

**Table 2**

| | Comparative Example H | Comparative Example J | Comparative Example K | Comparative Example L | Comparative Example M | Matrix Example 2 | Matnx Example 3 |
|---|---|---|---|---|---|---|---|
| Week 0 | 0.515 | 0.790 | 1.113¹ | 0.751 | 0.800 | 0.640 | 0.694 |
| Week 3 | 0.125 | 0.654 | 0.878 | 0.603 | 0.648 | 0.648 | 0.619 |
| Week 5 | 0.030 | 0.645 | 0.878 | 0 617 | 0.666 | 0 645 | 0 569 |
| Week 7 | 0.035 | 0.643 | 0.885 | 0.572 | 0.664 | 0 630 | 0.552 |
| Week 10 | 0.024 | 0.586 | 0.793 | 0.482 | 0.663 | 0.632 | 0.556 |
| Weak 20 | 0.004 | 0.636 | 0.348 | 0.591 | 0.618 | 0.554 | 0.547 |

| | | | | | | | |
|---|---|---|---|---|---|---|---|
| ¹ The Week 0 amount of 1.113% flavor is higher than the amount of flavor that was supposedly added to the gum. While this result could be simply an error due to random analytical error, it is more likely that either more than 7.2% of the weight of the gum of the spray dried flavor was added (formulation error), or that the spray dried flavor actually contained more than 11.3% active flavor (analytical error). In either event, it is still clear from the data, and especially FIG. 2, that what flavor there was in Comparative Example K at Week 0 was seriously lost by the time the Week 20 measurement was made. | | | | | | | |

The difference in inlet temperature of 190°C vs. 200°C showed that acacia gum gave higher loading levels at 190°C but slightly less shelf life. The mixture of acacia gum arid corn syrup solids gave the same loading levels, but better shelf life at 200°C. The composition gave both higher loading and improved shelf life, but better shelf life was obtained for the Matrix Example 2 spray dried at 190°C.

Other experiments have demonstrated that the spray dried matrix of some embodiments of the invention give better stability results compared to other conventional encapsulation processes, and give stability results as good as more complicated and expensive encapsulation processes.

### Flavor Duration

The next step in the invention is to make a form of the encapsulated flavor that will have a long flavor duration in chewing gum. When spray-dried fruit flavor was used to flavor a laboratory scale gum formulation, sensory panelists detected a "citrus" or "orangey" flavor that they considered an off flavor. To reduce this off flavor, the levels of ethyl butyrate and isoamyl acetate were increased in the fruit flavor formula. When the levels of these two flavors was increased, the percentage of the other flavors decreased. This modified flavor was then encapsulated by a spray drying process using the ingredients listed in Table 3 to form Matrix 4 (not according to the invention).

**Table 3**

| Matrix 4 | |
|---|---|
| Acacia Senegal (Valspray A from Valmar) | 266.0 grams |
| Corn Syrup Solids DE 42 | 266.0 grams |
| Fish Gelatin | 26.6 grams |
| Fruit flavor | 141.4 grams |

Gum arabic from *Acacia Senegal* was hydrated overnight to make a 40% solution. Fish gelatin was diluted in water at room temperature. The fish gelatin solution and the corn syrup solids were poured into the gum arabic solution and mixed for 5 minutes. The flavor was added at the end and mixed to form a milky solution. All the ingredients were blended for 10-15 seconds to get a good mix with a solids content of 46.85%. The mixture was homogenized under 21 MPa (3000 psi) to obtain an emulsion with internal phase droplet size of around 5-10µ. Immediately, this homogenized mix was spray-dried using a Spray Tech spray dryer under the following conditions: inlet temperature 200°C, outlet temperature 100°C, and air pressure of 52.5 MPa (7500 psi) The dried flavor had a theoretical flavor level of 20.14%.

The Matrix 4 powder was dry blended with polyvinyl acetate to form a mixture prior to extrusion. (Of course the inventive matrix of Examples 1, 2 and 3 above may also be combined with a vinyl polymer to make a long duration flavor material.) The mixture that was extruded consisted of: 47.5% of the spray-dried flavor, 50% polyvinyl acetate (VINNAPAS® B 30 SP), 1% acesulfame-K and 1.5% aspartame. All the ingredients were mixed to obtain a homogeneous mixture with a ratio of 47.5/50/1/1.5 flavors, polyvinyl acetate, acesulfame-K and aspartame. The temperature settings on the extruder were as follows:

| | | | | | | | |
|---|---|---|---|---|---|---|---|
| Zone | 7 | 6 | 5 | 4 | 3 | 2 | 1 |
| Temperature (°C) | 85 | 85 | 85 | 85 | 85 | 70 | 50 |

The screw speed was held constant at 200 rpm. The extruded ribbon was allowed to cool down, stored at 4°C (40°F) and later poured into a blender to reduce the particles size. The reduced size particles were screened to obtain desired cuts of particle sizes. Two sizes of particles were collected. One cut had a size that would pass through a USA standard testing sieve #18 and stay in a sieve #20. This product had an average particle size of about 1000µ. A second cut was taken between sieve #100 and #140 to obtain a particle size of about 100µ. These particles were used to flavor a chewing gum composition as listed in Table 4 to form Examples 5 and 6. The flavor loading of the extruded long-duration flavor material was 8.96%. In addition, three other test samples were made, each using a spray drying matrix different than that of the present invention. These products were mixed with polyvinyl acetate, acesulfame-K and aspartame and extruded at the same ratios and under the same conditions and as Inventive Matrix 4. The resulting extrudate was also cooled a ground, and a 1000µ average particle size cut collected. These were also mixed into the gum composition of Table 4 to form comparative examples N, P and Q.

**Table 4**

| | Control | Examples 5, 6, N, P and Q |
|---|---|---|
| Ingredient | (%) | (%) |
| Sugar | 57.42 | 48.23 |
| Gum Base | 19.30 | 19.30 |
| Corn Syrup (39 DE, 45.5 Be) | 13.91 | 13.91 |
| Dextrose | 7.28 | 7.28 |
| Glycerin | 1.15 | 1.15 |
| Liquid flavor | 0.81 | - |
| Encapsulated favor | - | 10.00 |
| Lecithin | 0.13 | 0.13 |

### SENSORY EVALUATION

Flavor loading was determined by gas chromatography. The Control sample flavored with liquid fruit flavor had a load of about 0.63% flavor by weight of the gum. Flavor loading for gum using the long-duration flavor material of the present invention described above was about 0.69%.

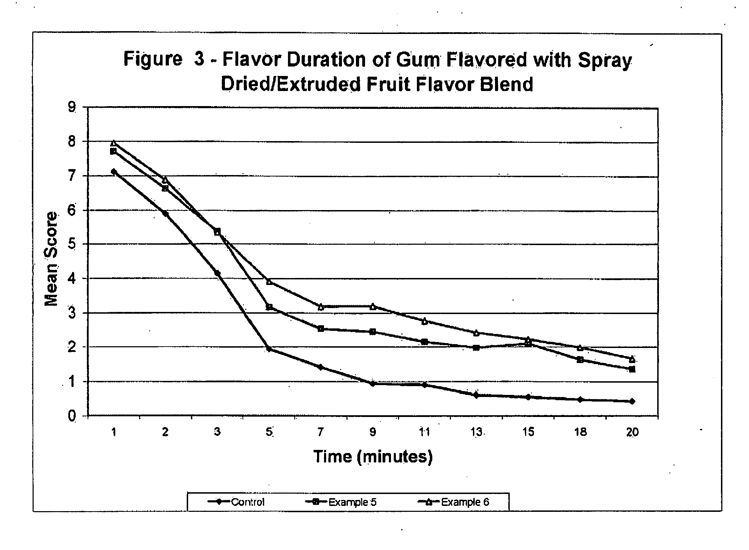

The Control, Example 5 (100µ average particle size), Example 6 (1000µ average particle size) and two of the other test samples (comparative examples N and P) were evaluated using a 20-minute time-intensity method. Sensory screening of comparative example Q indicated only a slight flavor extension, and so comparative example Q was not evaluated in the 20-minute time-intensity evaluation. The other samples were evaluated by 10 trained panelists, at regular time intervals during the course of 20 minutes. Results were given in a 10-point scale. Of the four samples, Example 6 had longer flavor and sweetness duration than the other samples. Example 6 was significantly higher than the Control for sweetness at 3 minutes through 20 minutes. Example 6 was also significantly higher than the Control for flavor from 5 minutes to 18 minutes during the evaluation. The results are given in Tables 5 and 6 below, and in Figures 3-6.

**TABLE 5**

| **Flavor Duration** | | | | | |
|---|---|---|---|---|---|
| | **Control** | **Example 5** | **Example 6** | **Comp. Ex. N** | **Comp. Ex. P** |
| | | 100µ | 1000µ | 1000µ | 1000µ |
| 1 minute | 7.12 | 7.72 | 7.96 | 7.35 | 7.61 |
| 2 minute | 5.91 | 6.63 | 6.88 | 6.33 | 6.20 |
| 3 minute | 4.14 | 5.38 | 5.34 | 4.97 | 4.33 |
| 5 minute | 1.93 | 3.16 | 3.90 | 3.21 | 2.46 |
| 7 minute | 1.41 | 2.54 | 3.18 | 2.59 | 1.74 |
| 9 minute | 0.94 | 2.45 | 3.19 | 2.04 | 1.54 |
| 11 minute | 0.90 | 2.15 | 2.77 | 1.92 | 1.41 |
| 13 minute | 0.60 | 1.97 | 2.42 | 1.65 | 1.19 |
| 15 minute | 0.55 | 2.09 | 2.22 | 1.70 | 1.18 |
| 18 minute | 0.48 | 1.62 | 1.98 | 1.45 | 0.99 |
| 20 minute | 0.43 | 1.35 | 1.65 | 1.11 | 0.84 |

**TABLE 6**

| **Sweetness Duration** | | | | | |
|---|---|---|---|---|---|
| | **Control** | **Example 5** | **Example 6** | **Comp. Ex. N** | **Comp. Ex. P** |
| | | 100µ | 1000µ | 1000µ | 1000µ |
| 1 minute | 8.32 | 8.79 | 9.53 | 8.55 | 8.75 |
| 2 minute | 6.54 | 7.84 | 8.38 | 7.33 | 7.26 |
| 3 minute | 4.71 | 6.25 | 6.67 | 5.77 | 5.01 |
| 4 minute | 3.22 | 4.83 | 5.60 | 5.11 | 3.99 |
| 5 minute | 2.20 | 4.15 | 4.95 | 4.07 | 3.00 |
| 7 minute | 1.62 | 3.16 | 4.14 | 3.82 | 2.51 |
| 9 minute | 1.14 | 3.10 | 4.10 | 3.72 | 2.25 |
| 11 minute | 0.99 | 2.78 | 3.67 | 3.22 | 1.92 |
| 13 minute | 0.70 | 2.48 | 3.3 | 3.22 | 1.82 |
| 15 minute | 0.62 | 2.63 | 2.94 | 2.77 | 1.67 |
| 18 minute | 0.46 | 1.96 | 2.56 | 2.47 | 1.30 |
| 20 minute | 0.40 | 1.71 | 2.24 | 2.06 | 1.36 |

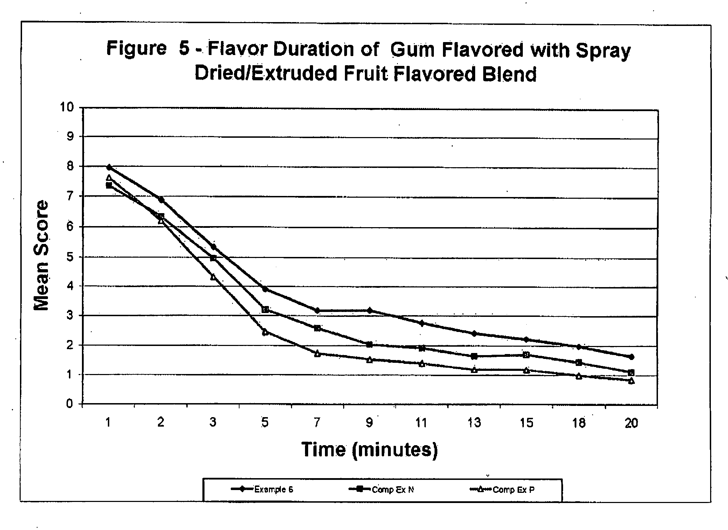

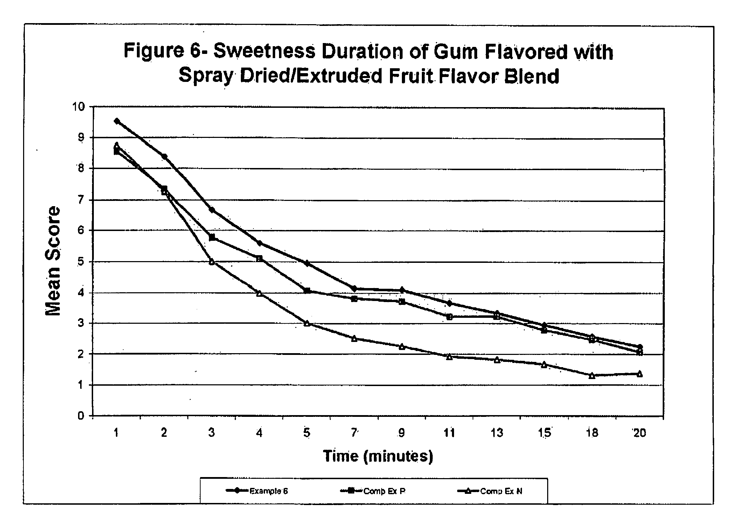

From this data it can be seen that the flavor level at 18 minutes for Example 6 was about the same of the flavor level of the control at about five minutes. This is a very significant increase in the flavor duration. It is typical that spray-dried flavors are water-soluble and have low flavor duration, even lower than the same amount of flavor added as a liquid. These results show that when the spray-dried flavors are encapsulated in polyvinyl acetate, a hydrophobic barrier is formed and the water solubility of the particle is reduced, producing longer flavor duration. What is even more surprising is that the flavor duration of the present invention was extended compared to other spray dried flavors encapsulated with polyvinyl acetate. Figures 5 and 6 show how the Example 6 material provided a longer duration than either of the comparative Examples N and P, which were of a similar particle size and polyvinyl acetate encapsulation.

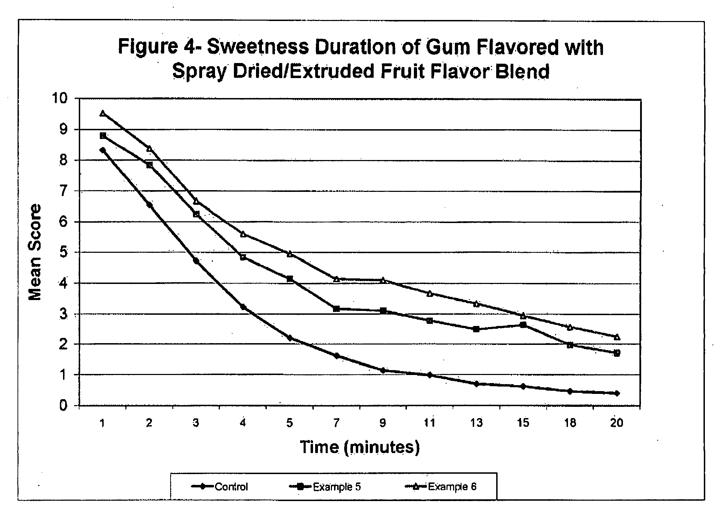

Figures 3 and 4 also show that particle size plays an important role in flavor duration. While Example 5 and Example 6 both had longer flavor and sweetness than the Control, Example 5, flavored with extruded particles sized under 100µ, had a shorter duration than Example 6, flavored with particles of 1000µ. This is believed to be because particles with a size of 100µ have a higher dissolution rate than particle with a size of 1000µ. So while spray-dried particles encapsulated in the vinyl polymer matrix take more time to be dissolved than just spray-dried particles, large particles have a reduced ratio of surface area to volume, which result in even slower dissolution, resulting in longer flavor duration.

## Claims

1. A method of encapsulating flavor to provide a long-duration flavor material comprising:
a) providing a flavor;
b) providing encapsulating ingredients comprising
i) acacia gum,
ii) corn syrup solids having a DE of between 24 and 44 or equivalent hydrogenated starch hydrolysates, and hydrolysates, and
iii) carrageenan or pectin and mixtures thereof as hydrocolloid material
c) encapsulating the flavor with a matrix comprising 30% to 60% acacia gum, 30% to 60% of said corn syrup solids or hydrogenated starch hydrolysates, and 2% to 20% hydrocolloid material to form an encapsulated flavor material; and
d) further combining the encapsulated flavor material with a vinyl polymer to incorporate the encapsulated flavor into a long-duration flavor material comprising said vinyl polymer by extrusion at a temperature of between 75°C and 110°C.

2. The method of claim 1 wherein the long-duration flavor material is ground to a reduced particle size and separated for use, and the particles collected for use have a weight average size of between 100 µm (microns) and 1000 µm (microns).

3. The method of any one of claims 1 to 2 wherein the long-duration flavor material further comprises a high-intensity sweetner.

4. The method of any one of claims 1 to 3 wherein the long-duration flavor material comprises 4% to 15% flavor, 10% to 30% gum arabic, 10% to 30% of said corn syrup solids or hydrogenated starch hydrolysates, 1% to 10% hydrocolloid material and 20% to 75% vinyl polymer.

5. The method of any one of claims 1 to 4 wherein the matrix is formed by a spray drying process.

6. The method of any one of claims 1 to 5 wherein the encapsulated flavor and vinyl polymer are mixed together and heated to a temperature of between 75°C and 110°C.

7. The method of any one of claims 1 to 6 wherein the vinyl polymer comprises polyvinyl acetate having a weight average molecular weight of between 25,000 and 100,000.

8. The method of any one of claims 1 to 6 wherein the vinyl polymer comprises polyvinyl acetate having a weight average molecular weight of between 50,000 and 80,000.

9. The method of any one of claims 1 to 8 wherein the vinyl polymer is selected from the group consisting of polyvinyl acetate; polyvinyl stearate; polyvinyl butyrate; polyvinyl propionate; polyvinyl alkanoates; copolymers of vinylacetate, vinyllaurate, vinylacetate, and vinylalkanoates; and polymers of alkenyl-vinylacetates, and mixtures thereof.

10. The method of any one of claims 1 to 9 wherein the hydrocolloid material is carrageenan.

11. The method of any one of claims 1 to 9 wherein the hydrocolloid material is pectin.

12. The method of any one of claims 1 to 9 wherein the encapsulating matrix comprises acacia gum, corn syrup solids and a hydrocolloid selected from the group consisting of carrageenan or pectin and combinations thereof.

13. A long-duration flavor material comprising:
a) 30% to 80% vinyl polymer; and
b) 20% and 70% encapsulated flavor;
wherein
the encapsulated flavor comprises 5% to 25% flavor and a matrix encapsulating the flavor, the matrix comprising:
i) 30% to 60% acacia gum,
ii) 30% to 60% corn syrup solids having a DE of between 24 and 44 or equivalent hydrogenated starch hydrolysates, and
iii) 2% to 20% carrageenan or pectin and as mixtures thereof hydrocolloid material;
wherein the matrix comprises at least 80% acacia gum and corn syrup solids or hydrogenated starch hydrolysates on a combined basis; and
c) the encapsulated flavor and vinyl polymer combined by extrusion at a temperature of between 75 °C and 110 °C.

14. The long-duration flavor material of claim 13 having a weight average particle size of between 100 µm (microns) and 1000 µm (microns).

15. The long-duration flavor material of any one of claims 13 to 14 wherein the encapsulated flavor matrix comprises 5% to 25% flavor, 24% to 48% acacia gum, 24% to 48% of said corn syrup solids or hydrogenated starch hydrolysates and 2% to 10% hydrocolloid material.

16. The long-duration flavor material of any one of claims 13 to 15 further comprising a high-intensity sweetner.

17. A chewing gum composition comprising:
a) 0.1% to 15% flavor, wherein at least part of the flavor comprises a long-duration flavor material comprising a vinyl polymer encapsulated matrix, the matrix being encapsulated with the vinyl polymer by extrusion at a temperature of between 75 °C and 110 °C wherein the matrix comprises
i) 30% to 60% acacia gum,
ii) 30% to 60% corn syrup solids having a DE of between 24 and 44 or equivalent hydrogenated starch hydrolysates, and
iii) 2% to 20% carrageenan or pectin and mixtures thereof as hydrocolloid material, the matrix comprising at least 80% acacia gum and corn syrup solids or hydrogenated starch hydrolysates on a combined basis.

18. The chewing gum composition of claim 17 wherein the long-duration flavor material has a flavor loading of between 5% and 20%.

19. The chewing gum composition of any one of claims 17 to 18 wherein the long-duration flavor material comprises 1% to 20% of the chewing gum composition.

20. The chewing gum composition of any one of claims 17 to 19 wherein the long-duration flavor material has a ratio of vinyl polymer: encapsulated flavor matrix of between 3:1 and 1:3.

## Patentansprüche

1. Verfahren zum Einkapseln eines Aromas für die Bereitstellung eines langzeitig beständigen Aromamaterials, das umfasst:
a) Bereitstellen eines Aromas;
b) Bereitstellen von Einkapselungsbestandteilen, die umfassen:
i) Akaziengummi,
ii) Maissirup-Feststoffe, die einen DE-Wert im Bereich von 24 bis 44 aufweisen, oder gleichwertige hydrierte Stärkehydrolysate, und
iii) Carrageenan oder Pektin und Gemische davon als Hydrokolloidmaterial;
c) Einkapseln des Aromas in eine Matrix, die 30 bis 60 % Akaziengummi, 30 % bis 60 % Maissirup-Feststoffe oder hydrierte Stärkehydrolysate und 2 bis 20 % Hydrokolloidmaterial umfasst, um ein eingekapseltes Aromamaterial zu bilden; und
d) weiterhin Kombinieren des eingekapselten Aromamaterials mit einem Vinylpolymer, um das eingekapselte Aroma durch Extrusion bei einer Temperatur im Bereich von 75 bis 110 °C in ein langzeitig beständiges Aromamaterial, das das Vinylpolymer umfasst, einzubringen.

2. Verfahren nach Anspruch 1, wobei das langzeitig beständige Aromamaterial auf eine kleinere Partikelgröße gemahlen wird und für die Verwendung klassiert wird, und wobei die für die Verwendung gesammelten Partikel eine gewichtsmittlere Größe im Bereich von 100 bis 1000 µm (Mikron) aufweisen.

3. Verfahren nach einem der Ansprüche 1 und 2, wobei das langzeitig beständige Aromamaterial weiterhin ein hochintensives Süßungsmittel umfasst.

4. Verfahren nach einem der Ansprüche 1 bis 3, wobei das langzeitig beständige Aromamaterial 4 bis 15 % Aroma, 10 bis 30 % Gummi arabicum, 10 bis 30 % Maissirup-Feststoffe oder hydrierte Stärkehydrolysate, 1 bis 10 % Hydrokolloidmaterial und 20 bis 75 % Vinylpolymer umfasst.

5. Verfahren nach einem der Ansprüche 1 bis 4, wobei die Matrix durch ein Sprühtrocknungsverfahren gebildet wird.

6. Verfahren nach einem der Ansprüche 1 bis 5, wobei das eingekapselte Aroma und das Vinylpolymer miteinander vermischt werden und auf eine Temperatur im Bereich von 75 bis 110 °C erhitzt werden.

7. Verfahren nach einem der Ansprüche 1 bis 6, wobei das Vinylpolymer Polyvinylacetat umfasst, das ein Gewichtsmittel des Molekulargewichts im Bereich von 25 000 bis 100 000 aufweist.

8. Verfahren nach einem der Ansprüche 1 bis 6, wobei das Vinylpolymer Polyvinylacetat umfasst, das ein Gewichtsmittel des Molekulargewichts im Bereich von 50 000 bis 80 000 aufweist.

9. Verfahren nach einem der Ansprüche 1 bis 8, wobei das Vinylpolymer aus der Gruppe ausgewählt wird, die aus Polyvinylacetat; Polyvinylstearat; Polyvinylbutyrat; Polyvinylpropionat; Polyvinylalkanoaten; Copolymeren von Vinylacetat, Vinyllaurat, Vinylacetat und Vinylalkanoaten; und Polymeren von Alkenylvinylacetaten und Gemischen davon besteht.

10. Verfahren nach einem der Ansprüche 1 bis 9, wobei es sich bei dem Hydrokolloidmaterial um Carrageenan handelt.

11. Verfahren nach einem der Ansprüche 1 bis 9, wobei es sich bei dem Hydrokolloidmaterial um Pektin handelt.

12. Verfahren nach einem der Ansprüche 1 bis 9, wobei die einkapselnde Matrix Akaziengummi, Maissirup-Feststoffe und ein Hydrokolloid umfasst, das aus der Gruppe ausgewählt wird, die aus Carrageenan oder Pektin und Kombinationen davon besteht.

13. Langzeitig beständiges Aromamaterial, das umfasst:
a) 30 bis 80 % Vinylpolymer; und
b) 20 bis 70 % eingekapseltes Aroma; wobei das eingekapselte Aroma 5 bis 25 % Aroma und eine Matrix, in die das Aroma eingekapselt ist, umfasst, wobei die Matrix umfasst:
i) 30 bis 60 % Akaziengummi,
ii) 30 bis 60 % Maissirup-Feststoffe, die einen DE-Wert im Bereich von 24 bis 44 haben, oder gleichwertige hydrierte Stärkehydrolysate, und
iii) 2 bis 20 % Carrageenan oder Pektin und Gemische davon als Hydrokolloidmaterial,
wobei die Matrix mindestens 80 % Akaziengummi und Maissirup-Feststoffe oder hydrierte Stärkehydrolysate in kombinierter Form umfasst; und
c) das eingekapselte Aroma und das Vinylpolymer werden durch Extrusion bei einer Temperatur im Bereich von 75 bis 110 °C kombiniert.

14. Langzeitig beständiges Aromamaterial nach Anspruch 13, das eine gewichtsmittlere Partikelgröße im Bereich von 100 bis 1000 µm (Mikron) aufweist.

15. Langzeitig beständiges Aromamaterial nach einem der Ansprüche 13 bis 14, wobei die eingekapselte Aromamatrix 5 bis 25 % Aroma, 24 bis 48 % Akaziengummi, 24 bis 48 % Maissirup-Feststoffe oder hydrierte Stärkehydrolysate und 2 bis 10 % Hydrokolloidmaterial umfasst.

16. Langzeitig beständiges Aromamaterial nach einem der Ansprüche 13 bis 15, das weiterhin ein hochintensives Süßungsmittel umfasst.

17. Kaugummizusammensetzung, die umfasst:
a) 0,1 bis 15 % Aroma, wobei mindestens ein Teil des Aromas ein langzeitig beständiges Aromamaterial umfasst, das eine Vinylpolymer-eingekapselte Matrix umfasst, wobei die Matrix durch Extrusion bei einer Temperatur im Bereich von 75 bis 110 °C in das Vinylpolymer eingekapselt wird, wobei die Matrix umfasst:
i) 30 bis 60 % Akaziengummi,
ii) 30 bis 60 % Maissirup-Feststoffe, die ein DE-Wert im Bereich von 24 bis 44 aufweisen, oder gleichwertige hydrierte Stärkehydrolysate, und
iii) 2 bis 20 % Carrageenan oder Pekin und Gemische davon als Hydrokolloidmatrial,
wobei die Matrix mindestens 80 % Akaziengummi und Maissirup-Feststoffe oder hydrierte Stärkehydrolysate in kombinierter Form umfasst.

18. Kaugummizusammensetzung nach Anspruch 17, wobei das langzeitig beständige Aromamaterial eine Aromabeladung im Bereich von 5 bis 20 % aufweist.

19. Kaugummizusammensetzung nach einem der Ansprüche 17 und 18, wobei das langzeitig beständige Aromamaterial 1 bis 20 % der Kaugummizusammensetzung umfasst.

20. Kaugummizusammensetzung nach einem der Ansprüche 17 bis 19, wobei das langzeitig beständige Aromamaterial ein Verhältnis Vinylpolymer : eingekapselte Aromamatrix im Bereich von 3 : 1 bis 1 : 3 aufweist.

## Revendications

1. Procédé d'encapsulation d'un arôme pour fournir une matière à base d'arôme de longue durée, comprenant les étapes consistant à :
a) fournir un arôme ;
b) fournir des ingrédients d'encapsulation comprenant
i) de la gomme arabique,
ii) du sirop de glucose déshydraté ayant un équivalent en dextrose (DE) entre 24 et 44 ou des hydrolysats d'amidon hydrogénés équivalents, et
iii) de la carraghénine ou de la pectine et leurs mélanges comme matière hydrocolloïdale
c) encapsuler l'arôme avec une matrice comprenant 30 % à 60 % de gomme arabique, 30 % à 60 % dudit sirop de glucose déshydraté ou desdits hydrolysats d'amidon hydrogénés, et 2 % à 20 % de matière hydrocolloïdale pour former une matière à base d'arôme encapsulée ; et
d) combiner en outre la matière à base d'arôme encapsulée avec un polymère vinylique pour incorporer l'arôme encapsulé en une matière à base d'arôme de longue durée comprenant ledit polymère vinylique par extrusion à une température entre 75°C et 110°C.

2. Procédé suivant la revendication 1, dans lequel la matière à base d'arôme de longue durée est broyée à un diamètre de particule réduit et séparée pour son utilisation, et les particules recueillies pour leur utilisation ont un diamètre moyen en poids entre 100 µm (micromètres) et 1000 µm (micromètres).

3. Procédé suivant l'une quelconque des revendications 1 et 2, dans lequel la matière à base d'arôme de longue durée comprend en outre un édulcorant de grande puissance.

4. Procédé suivant l'une quelconque des revendications 1 à 3, dans lequel la matière à base d'arôme de longue durée comprend 4 % à 15 % d'arôme, 10 % à 30 % de gomme arabique, 10 % à 30 % dudit sirop de glucose déshydraté ou desdits hydrolysats d'amidon hydrogénés, 1 % à 10 % de matière hydrocolloïdale et 20 % à 75 % de polymère vinylique.

5. Procédé suivant l'une quelconque des revendications 1 à 4, dans lequel la matrice est formée par un procédé de séchage par atomisation.

6. Procédé suivant l'une quelconque des revendications 1 à 5, dans lequel l'arôme encapsulé et le polymère vinylique sont mélangés l'un à l'autre et chauffés à une température entre 75°C et 110°C.

7. Procédé suivant l'une quelconque des revendications 1 à 6, dans lequel le polymère vinylique comprend un poly-(acétate de vinyle) ayant une moyenne en poids du poids moléculaire entre 25 000 et 100 000.

8. Procédé suivant l'une quelconque des revendications 1 à 6, dans lequel le polymère vinylique comprend un poly-(acétate de vinyle) ayant une moyenne en poids du poids moléculaire entre 50 000 et 80 000.

9. Procédé suivant l'une quelconque des revendications 1 à 8, dans lequel le polymère vinylique est choisi dans le groupe consistant en le poly(acétate de vinyle) ; le poly-(stéarate de vinyle) ; le poly(butyrate de vinyle) ; le poly(propionate de vinyle) ; des poly(alcanoates de vinyle) ; des copolymères d'acétate de vinyle, de laurate de vinyle, d'acétate de vinyle et d'alcanoates de vinyle ; et des polymères d'alcényl-vinylacétates, ainsi que leur mélanges.

10. Procédé suivant l'une quelconque des revendications 1 à 9, dans lequel la matière hydrocolloïdale est la carraghénine.

11. Procédé suivant l'une quelconque des revendications 1 à 9, dans lequel la matière hydrocolloïdale est la pectine.

12. Procédé suivant l'une quelconque des revendications 1 à 9, dans lequel la matrice d'encapsulation comprend de la gomme arabique, du sirop de glucose déshydraté et un hydrocolloïde choisi dans le groupe consistant en la carraghénine, la pectine et leurs associations.

13. Matière à base d'arôme de longue durée comprenant :
a) 30 % à 80 % de polymère vinylique ; et
b) 20 % à 70 % d'arôme encapsulé ;
dans laquelle
l'arôme encapsulé comprend 5 % à 25 % d'arôme et une matrice encapsulant l'arôme, la matrice comprenant :
i) 30 % à 60 % de gomme arabique,
ii) 30 % à 60 % de sirop de glucose déshydraté ayant un DE entre 24 et 44 ou d'hydrolysats d'amidon hydrogénés équivalents, et
iii) 2 % à 20 % de carraghénine ou de pectine et de leurs mélanges comme matière hydrocolloïdale ;
la matrice comprenant au moins 80 % de gomme arabique et de sirop de glucose déshydraté ou d'hydrolysats d'amidon hydrogénés sur base combinée ; et
c) l'arôme encapsulé et le polymère vinylique combinés par extrusion, à une température entre 75°C et 110°C.

14. Matière à base d'arôme de longue durée suivant la revendication 13, ayant une moyenne en nombre en poids du diamètre de particules entre 100 µm (micromètres) et 1000 µm (micromètres).

15. Matière à base d'arôme de longue durée suivant l'une quelconque des revendications 13 et 14, dans laquelle la matrice d'arôme encapsulée comprend 5 % à 25 % d'arôme, 24 % à 48 % de gomme arabique, 24 % à 48 % dudit sirop de glucose déshydraté ou desdits hydrolysats d'amidon hydrogénés et 2 % à 10 % de matière hydrocolloïdale.

16. Matière à base d'arôme de longue durée suivant l'une quelconque des revendications 13 à 15, comprenant en outre un édulcorant de grande puissance.

17. Composition de gomme à mâcher, comprenant :
a) 0,1 % à 15 % d'arôme, au moins une partie de l'arôme comprenant une matière à base d'arôme de longue durée comprenant une matrice encapsulée avec un polymère vinylique, la matrice étant encapsulée avec le polymère vinylique par extrusion à une température entre 75°C et 110°C, ladite matrice comprenant
i) 30 % à 60 % de gomme arabique,
ii) 30 % à 60 % de sirop de glucose déshydraté ayant un DE entre 24 et 44 ou d'hydrolysats d'amidon hydrogénés équivalents, et
iii) 2 % à 20 % de carraghénine ou de pectine et de leurs mélanges comme matière hydrocolloïdale,
la matrice comprenant au moins 80 % de gomme arabique et de sirop de glucose déshydraté ou d'hydrolysats d'amidon hydrogénés sur base combinée.

18. Composition de gomme à mâcher suivant la revendication 17, dans laquelle la matière à base d'arôme de longue durée a une charge en arôme entre 5 % et 20 %.

19. Composition de gomme à mâcher suivant l'une quelconque des revendications 17 et 18, dans laquelle la matière à base d'arôme de longue durée représente 1 % à 20 % de la composition de gomme à mâcher.

20. Composition de gomme à mâcher suivant l'une quelconque des revendications 17 à 19, dans laquelle la matière à base d'arôme de longue durée a un rapport polymère vinylique:matrice d'arôme encapsulé entre 3:1 et 1:3.
